(19) Europäisches Patentamt European Patent Office Office européen des brevets

(11) **EP 2 835 291 B1**

(12) **EUROPEAN PATENT SPECIFICATION**

(45) Date of publication and mention of the grant of the patent:
**05.10.2016  Bulletin 2016/40**

(51) Int Cl.:
***B60S 1/08*** (2006.01)

(21) Application number: **14425103.0**

(22) Date of filing: **05.08.2014**

(54) **Method for the determination of the precipitation intensity from a moving vehicle/boat, and system for the space-time characterization of a precipitation field on wide territory areas**

Verfahren zum Detektieren von Niederschlagintensität aus einem bewegenden Fahrzeug/Boot, und ein System zum Raum-zeit-Charakterisieren eines Niederschlagsfeld auf einen breiten geografischen Gebiet

Méthode de détermination de l'intensité de précipitation à partir d'un véhicule ou bateau mouvant, et un système de caractérisation espace-temps d'un champs de précipitation sur des surfaces larges

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **09.08.2013  IT RM20130469**

(43) Date of publication of application:
**11.02.2015  Bulletin 2015/07**

(73) Proprietor: **UNIVERSITA DEGLI STUDI DI GENOVA 16126 Genova (IT)**

(72) Inventors:
• **Lanza, Luca Giovanni 16126 Genova (GE) (IT)**
• **LA Barbera, Paolo 16126 Genova (GE) (IT)**

(74) Representative: **Tiburzi, Andrea et al Barzanò & Zanardo Roma S.p.A. Via Piemonte 26 00187 Roma (IT)**

(56) References cited:
**EP-A2- 1 398 230        FR-A1- 2 970 215 US-A1- 2006 055 354**

## Description

The present invention relates to a method for the determination of the precipitation intensity from a moving vehicle/boat, and system for the space-time characterization of a precipitation field on wide territory areas.

More specifically, the invention concerns a method, which allows obtaining precipitation intensity real values from data collected from one or more incremental wetting sensors (increase of the thickness of the water blade deposited during the time) placed on a moving vehicle (e.g. an automobile or a boat) and the vehicle speed data provided by at least one speed sensor. These precipitation data are obtained in real time and, knowing the vehicle position, can be mapped in the area, resulting in a space-time characterization of the precipitation field over large areas of the territory. The invention also concerns the related systems that allow to obtain these results.

## Background of the invention

The measure of the intensity of liquid precipitation on the ground (commonly known as rain) is usually carried out by pluviometers, or by remote sensors. Pluviometers are measuring instruments that collect the rain in a container (collectors) or observe as it crosses a control volume (not collectors), to determine the precipitated volume per unit time. The remote sensors estimate the rain that falls on a portion of the territory through the observation of the variables related to it, such as noise induced on the transmission and/or reception of an optical or electromagnetic signal. In both cases, the sensors are used in a fixed position in the space and, at most, orient its range in different directions into the surrounding space (weather radar).

It is also known the use of the motor vehicle wetting glass as a measure of the amount of water that is deposited in time, periodically removed by the use of the wiper.

The measure of the degree of wetting is object of preceding patents, which have the purpose of controlling the actuation of the wiper. For example, documents EP1398230, US2012006110 and FR2970215 describe devices for sensing the wetting degree of the front glass of a car, useful for the activation of the wiper or of the headlights of a motor vehicle, or as driving assistance. These devices are available on many vehicles on the market, but they do not provide an assessment of the precipitation intensity in quantitative terms.

Document US 2006/0055354 A discloses a method and system for the determination of the real intensity of liquid precipitation on the ground starting from a moving vehicle according to the preamble of claim 1.

Object of the present invention is providing a method for the quantitative determination of the precipitation intensity.

It is further specific object a system that realizes the method object of the invention.

It is further specific object of the present invention a system for the space-time characterization of a precipitation field on wide territory areas.

It is object of the present invention that of providing method for the determination of the real intensity of liquid precipitation on ground starting from a moving vehicle, the vehicle comprising at least a speed sensor providing its speed $v_a$ along time, as well as a surface, integral to the same vehicle and inclined of an angle $\alpha$ with respect to the plane perpendicular to the gravity force, with the condition **$0 < \alpha < 90°$**, on said surface being placed one or more sensors of perceived intensity of liquid precipitation measuring an increment of a water layer deposed by the atmospheric precipitation on the same surface, the method being characterized in that it executes the following steps:

A. obtaining from said one or more sensors of perceived intensity a plurality of values of perceived precipitation intensity $I_P$ in correspondence to a plurality of subsequent time instants;
B. obtaining from said at least a speed sensor a plurality of values for speed $v_a$ in correspondence to said plurality of subsequent time instants;
C. performing, with respect to a plurality of values pairs $(I_P, v_a)$ obtained from the measurements of steps A and B, a regression according to the formula:

$$I_P = I_{PV} + I_{PO} = g_{PV}(I, a) + g_{PO}(I, a, v_a)$$

wherein $g_{PV}(I, a)$ is an analytical function, invertible with respect to the real precipitation $I$, that represents the intensity of precipitation crossing the horizontal projection of said surface, and $g_{PO}(I, a, v_a)$ **is** an analytical function representing the intensity of precipitation that crosses the vertical projection of said surface;
D. inverting the function $g_{PV}(I, a)$ calculated in step C by regression, and obtaining the real precipitation value $I$.

According to an embodiment of the invention, the regression of step B is a polynomial regression.

According to an embodiment of the invention, $g_{PO}(I, a, v_a)$ is an analytical function of the water content in atmosphere, and in that it performs the following step subsequent to step C:

E. inverting the function $g_{PO}(I, a, v_a)$ calculated in step C by regression, and obtaining the value of said water content in the atmosphere. According to an embodiment of the invention, the regression of step B is a linear regression, with:

$$I_P = I_{PV} + I_{PO} = I \cdot cos\alpha + I_{O1} \cdot sen\alpha \cdot v_a$$

being $g_{PV}(I, \alpha) = I \cdot cos\alpha$, $g_{P0}(I, \alpha, v_\alpha) = I_{O1} \cdot sen\alpha \cdot v_a$, and $I_{O1} = \rho \dfrac{3.6}{1000}$, with $\rho$ the precipitation volumetric density, being an equivalent precipitation intensity per unitary speed.

According to an embodiment of the invention, said angle $\alpha$ is comprised between 30° and 60°.

According to an embodiment of the invention, said surface is a transparent surface.

According to an embodiment of the invention, a windscreen wiper acts on said surface for the periodic removal of the accumulated precipitation, the windscreen wiper being operated on the basis of the precipitation detection by said one or more sensors of perceived intensity, or being simply temporized.

It is further specific object of the present invention a system for the determination of the real precipitation intensity from a moving vehicle, comprising:

- at least a speed sensor providing its speed $v_a$ along time, the sensor being on board of the vehicle;
- a surface, integral to the vehicle, inclined by an angle $\alpha$ with respect to the plane perpendicular to the gravity force, with the condition $0 < \alpha < 90°$, on said surface being placed one or more sensors of perceived precipitation intensity that measure an increment of thickness of a precipitation layer on the same surface;
- a data processing electronic unit, for example a car central unit;

the system being characterized in that said data processing electronic unit comprises means to perform steps A-D of the method according to any claim 1 to 7.

According to an embodiment of the invention, said data processing electronic unit is on board of the vehicle.

It is further object of the present invention a system for the space-time characterization of a precipitation field on wide territory areas, characterized in that it comprises:

- a plurality of systems for the determination of the precipitation real intensity from a moving vehicle according to the invention, provided with means for the data transmission towards remote;

- a data collection and processing central unit, configured to collect real precipitation data sent from said plurality of systems, and map them on the territory areas along time.

According to an embodiment of the invention, said data collection and processing central unit is the data processing electronic unit of claim 8 and is an only unit for all the vehicles.

The present invention will be now described, for illustrative but not limitative purposes, with particular reference to the figures of the enclosed drawings, wherein:

- figure 1 a scheme of an embodiment of the system according to the invention;
- figure 2 shows a diagram of the components calculated in an embodiment of the method according to the invention;
- figure 3 shows a graph with an example of linear regression according to the method of the invention.

## Detailed description of examples of the invention

As illustrated above, the measurement of the precipitation intensity of the liquid to the ground (commonly known as rain) is normally carried out by pluviometers or by remote sensors.

The first innovative aspect of the present invention is constituted by the fact that the used sensor is in movement on a vehicle that moves in the space at a variable speed. The rain intensity is therefore measured in several positions while time passing , mutually linked by the trajectory that the vehicle on the territory.

As "vehicle" here it is intended any transport means (e.g. automobile, bus, truck, train, etc.), including boats.

A second novel aspect is the use of two simple information easily and commonly available of modern design vehicles/boats (wiper activation and speed), to obtain an intensity measure of the rain that does not require additional relevant hardware installations (it can be then easily implemented, for example, in the control unit of the car).

A third innovative aspect is constituted by the possibility to have several sensors in motion mutually connected by a management system of the measurements detected, at very low cost, which can allow the continuous and detailed monitoring even in very extensive area portions, including marine surfaces, thus overcoming the current difficulty in monitoring the rain intensity in reduced space-time scales, especially in urban areas or for traffic control.

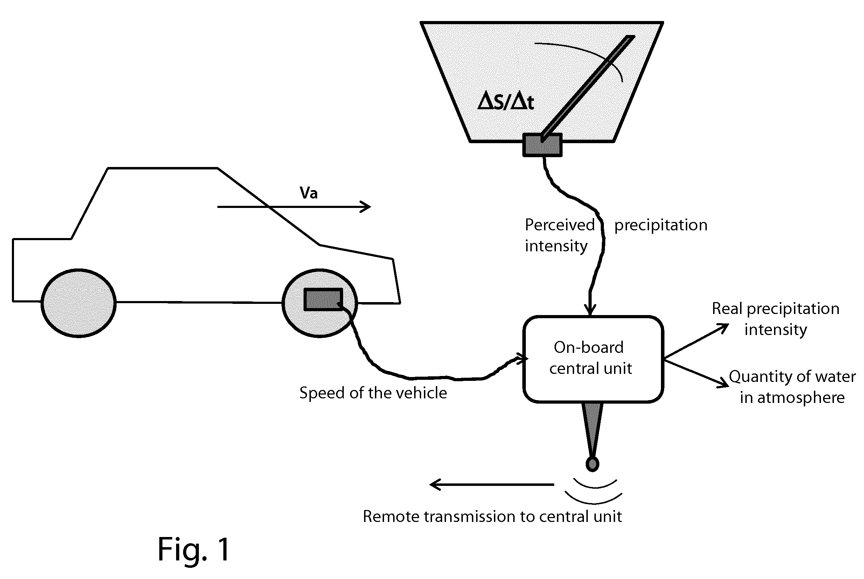

Referring to figure 1, the procedure according to the invention uses data measured by an existing sensor (not object of the present invention) capable of detecting the increase in time of the amount of water present on an inclined surface of a moving vehicle exposed to atmospheric precipitation (rain). In a preferred application, the sensor measures the attenuation of infrared light through a moving transparent surface. Typically, this sensor is used for the automatic activation of windscreen wipers on cars. The procedure is applicable also on an opaque surface equipped with an appropriate measuring device.

An embodiment of the procedure is based on certain assumptions regarding the composition of the atmosphere, in terms of water content in liquid form during a precipitation event. It is assumed in particular, also on the basis of literature data and the state of the knowledge in the field, the number, size, and the falling speed of the raindrops, expressing them in statistical terms by a suitable probability distribution of the diameter d of the droplets (whose mathematical form is assumed known a priori).

Given the value of the average diameter of the water droplets present in the atmosphere $\mu_d$ [mm], the value of which is typically around 1 mm in the experimental observations, and a value of the maximum diameter $D_{max}$ [mm], which defines the limit beyond which the size of the drop is no longer physically sustainable (the drop breaks into smaller droplets), and has values around 5 mm, there are defined:

- the theoretical probability density of the droplets diameters in the atmosphere, assumed of exponential form:

$$f_D(d) = \lambda_d e^{-\lambda_d \cdot d} \quad \text{where} \quad \lambda_d = {}^1/\mu_d$$

the cumulative probability distribution of which takes the form:

$$F_D(d) = 1 - e^{-\lambda_d \cdot d} = 1 - e^{-d/\mu_d}$$

- the corresponding real distributions of the diameters of the droplets bound to the maximum diameter: $f'_D(d)$, $F'_D(d)$ obtained assuming to rescale the function of a reduced interval, limited above by $D_{max}$, with:

$$F'_D(d) = \frac{F_D(d)}{F_D(D_{max})} \quad \text{for} \quad d < D_{max}$$

The probability density can be obtained, under restrictive assumptions, scaling uniformly the entire distribution in the form:

$$f'_D(d) = \frac{f_D(d)}{F_D(D_{max})} \quad \text{for} \quad d < D_{max}$$

Depending on these probability distributions, it is possible to evaluate the water content of the atmosphere in liquid form during the event of rain through the volumetric density $\rho$ [mm$^3$/m$^3$]. In fact, this density can be expressed as the product between the number of drops per unit volume $Ng$ [-] times the corresponding average volume of the drops $\mu_v$ [mm$^3$] (assumed spherical), according to the expression:

$$\rho = \left[ \frac{1}{6}\pi \int_0^\infty f_D(d) \cdot d^3 \mathrm{d}d \right] \cdot N_g = \frac{1}{6}\pi \int_0^\infty f_D(d) \cdot d^3 \mathrm{d}d = \mu_v \cdot N_g$$

where:

$$\mu_v = 3! \frac{1}{6} \pi \cdot \mu_d^3$$

Using probability distributions bounded to the maximum value of the diameter, it is obtained instead:

$$\rho = \left[ \frac{1}{6} \pi \int_0^\infty f_D'(d) \cdot d^3 \mathrm{d}d \right] \cdot N_g' = \cdots = \mu_v' \cdot N_g'$$

where $\mu_v'$ and N'g are respectively the mean diameter and the number of drops relative to the real distribution bounded, and it must be in line with the previous expression, for given value of p:

$$\mu_v \cdot N_g = \mu_v' \cdot N_g'$$

It is now assumed that a vehicle in motion with speed $v_a$ [m/s] has an inclined opaque or transparent surface, typically the windshield, equipped with appropriate equipment capable of detecting, for example, through the increase of the attenuation in the infrared light (if the surface is transparent), a signal increasing in time (with appropriate temporal scanning) and representative of the quantitative measure of the water blade that forms on the surface in rainy conditions. Periodically, the water blade is removed (typically by the wiper blades) so as to allow the start of a new incremental measure. Let s [mm$^3$/m$^2$] the value of this thickness, and $\alpha$ the inclination angle of the surface relative to the horizontal (with the condition 0 < $\alpha$ < 90°, and an optimum interval between 30° and 60°).

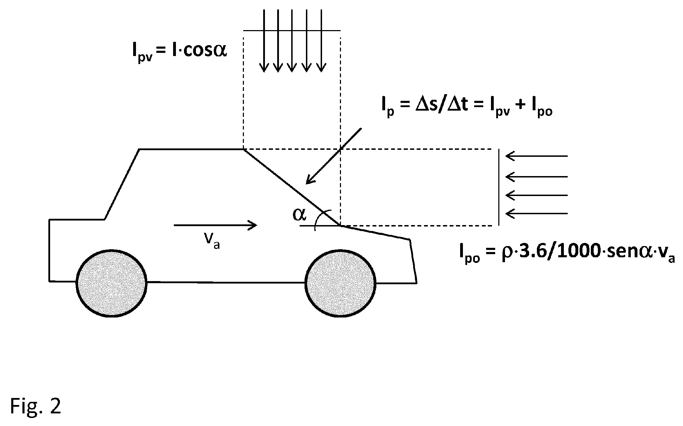

Referring to figure 2, the thickness increase $\Delta$s of the water blade, in the time interval $\Delta$t corresponds to the "perceived" rain intensity by the vehicle $I_P$ [mm/h] = $\Delta$s/$\Delta$t, which is constituted by two components:

- the intensity of the rain that crosses the horizontal projection of the reference surface, assumed unitary, $I_{PV} = I \cdot \cos \alpha$, (where I is the actual intensity of the rain to be determined) due to the fall of raindrops in the atmosphere;
- the rain intensity that crosses the vertical projection of the reference surface, **I_PO**, due to the speed at which the vehicle passes through the atmosphere that contains a certain drops density $\rho$.

As regards the first component, the intensity value depends essentially on the fall speed of the rain drops in the atmosphere, which is function of the diameter in the form: $v_g = K\sqrt{d}$, where K is a suitable constant.

Wishing to express the intensity in mm/h (as usual for the measurement of the rain) it is obtained:

$$I = \frac{3.6}{1000} \cdot \frac{1}{6} \pi \cdot N_g' \cdot K \int_0^{D_{max}} f_D'(d) \cdot d^3 \cdot \sqrt{d} \, \mathrm{d}d$$

The integral in this expression can be solved in numerical form once known constants **N'g, D$_{max}$** and **K.** The vertical component of the intensity perceived will therefore be **I_PV=I·cos** $\alpha$.

As regards the second component, its value depends on the volumetric density of the water in the atmosphere and on the speed of the vehicle that crosses it. Considering a unitary speed (1 m/s) the intensity equivalent **I_O1** is:

$I_{O1} = \rho \, \frac{3.6}{1000}$, with **I_O1** in mm/h and $\rho$ in mm$^3$/m$^3$, and then for an assigned speed, it is obtained: **I_PO = v_a · I_O1 · sen** $\alpha$.

At this point it is straightforward to write:

$$I_P = I_{PV} + I_{PO} = I \cdot \cos\alpha + I_{O1} \cdot sen\alpha \cdot v_a$$

the equation that relates the intensity of the perceived rain, corresponding to the value of the increase of the thickness s of the water blade in the time unit, to the actual intensity of rainfall I, known the vehicle speed, the volumetric density in the atmosphere and the angle $\alpha$.

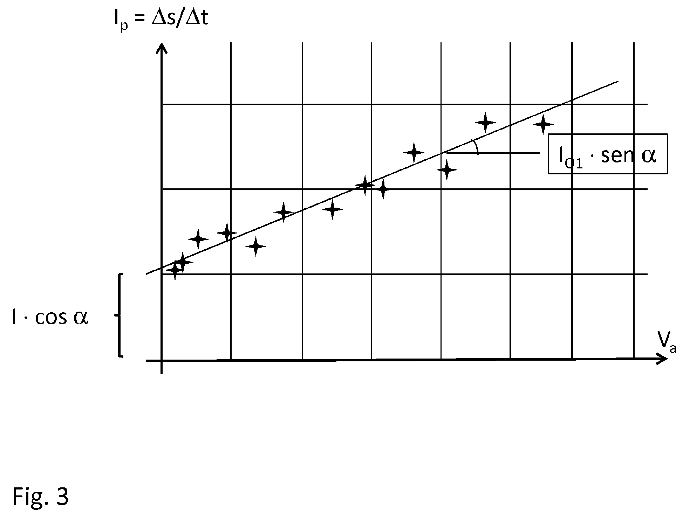

A moving vehicle is therefore able to assess the perceived value of the rain intensity in different time instants, at which its speed is known, using existing sensors. The pairs of values (*I_P, v_a*) are therefore interpreted as experimental data of the model shown above. A simple linear regression (cfr. fig. 3) of a sufficient number of "readings" gives the value of the two components of the above equation $I_{PV} = I \cdot \cos\alpha$ and $I_{O1} \cdot \operatorname{sen}\alpha$, which correspond respectively to the intercept and the slope of the regression line.

The real rain intensity will then be obtained as $I = I_{PV} / \cos\alpha$. From the angular coefficient value. estimating the corresponding volumetric density $\rho$, by the relation stated above is also possible.

The model illustrated above leads to a particular simple linear relationship. However, other models can be used that lead to non-linear relations between perceived rain intensity and real intensity. In this case, it can always be used the data from the sensors mentioned above and realize a non-linear regression to obtain the real intensity from the one perceived and the vehicle speed.

The procedure described for the single vehicle can be implemented in a very simple way on independent processor installed on board of the vehicle itself or by modifying the software of the electronic control unit.

An extension of the procedure also involves the use of a fleet of vehicles that remotely transmit their position to a control center, speed and $I_P$ value detected by the incrementally measuring instrument. Some company fleets categories are already equipped for the remotely transmission to a control center (bus, taxi, business transportation service, etc.).

In this case, the procedure can have a large number of experimental curves each obtained for a single vehicle, and, known for each vehicle the parameter $\alpha$, applying a "clustering" and estimation algorithm of the areal distribution of the intensity to obtain a space-time definition of the rain field. For example, a practical application would be the communication to the users of a road/highway of the weather conditions they will encounter at some distance along the route. In urban areas, one of the applications is the capability to identify, in terms of critical rainfalls (at the limit of the disposal capacity of drainage systems), areas of the city, in which inefficiencies (floods) may be encountered and thus allowing the routing of traffic flows.

The technical advantages of the present invention include:

- ease of application (it does not require additional equipment in operating conditions);
- availability of a large number of simultaneous data;
- operation robustness (less sensitive to application errors);
- it does not require significant hardware interventions on the vehicle/boat subject to implementation;
- reconstruction of space-time precipitation fields;
- immediate availability to the driver of the intensity precipitation datum (real-time);
- determination of the rain "perceived" due to the variation of the speed.

The commercial advantages of the present invention include:

- use on any private vehicle/boat or corporate fleets, as a source of information for the individual user/driver;
- use as part of a distributed monitoring network on the territory by the agencies and/or interested;
- the cost of the application is extremely limited (hardware required already commercially available).

In the above, preferred embodiments have been described and variations have been suggested of the present invention, but it is to be understood that modifications and/or changes can be introduced by those skilled in the art without departing from the relevant scope as defined in the enclosed claims.

## Claims

1. Method for the determination of the real intensity of liquid precipitation on ground starting from a moving vehicle, the vehicle comprising at least a speed sensor providing its speed $v_a$ along time, as well as a surface, integral to the same vehicle and inclined of an angle $\alpha$ with respect to the plane perpendicular to the gravity force, with the condition $0 < \alpha < 90°$, on said surface being placed one or more sensors of perceived intensity of liquid precipitation measuring an increment of a water layer deposed by the atmospheric precipitation on the same surface, the method being **characterized in that** it executes the following steps:

   A. obtaining from said one or more sensors of perceived intensity a plurality of values of perceived precipitation intensity $I_P$ in correspondence to a plurality of subsequent time instants;
   B. obtaining from said at least a speed sensor a plurality of values for speed $v_a$ in correspondence to said plurality of subsequent time instants;
   C. performing, with respect to a plurality of values pairs $(I_P, v_a)$ obtained from the measurements of steps A and B, a regression according to the formula:

$$I_P = I_{PV} + I_{PO} = g_{PV}(I, a) + g_{PO}(I, a, v_a)$$

wherein $g_{PV}(I, \alpha)$ is an analytical function, invertible with respect to the real precipitation $I$, that represents the intensity of precipitation crossing the horizontal projection of said surface, and $g_{PO}(I, \alpha, v_\alpha)$ is an analytical function representing the intensity of precipitation that crosses the vertical projection of said surface;

D. inverting the function $g_{PV}(I, \alpha)$ calculated in step C by regression, and obtaining the real precipitation value $I$.

2. Method according to claim 1, **characterized in that** the regression of step B is a polynomial regression.

3. Method according to claim 1 or 2, **characterized in that** $g_{PO}(I, \alpha, v_a)$ is an analytical function of the water content in atmosphere, and **in that** it performs the following step subsequent to step C:

E. inverting the function $g_{PO}(I, \alpha, v_\alpha)$ calculated in step C by regression, and obtaining the value of said water content in the atmosphere.

4. Method according to any claim 1 to 3, **characterized in that** the regression of step B is a linear regression, with:

$$I_P = I_{PV} + I_{PO} = I \cdot \cos\alpha + I_{01} \cdot sen\alpha \cdot v_a$$

being $g_{PV}(I, \alpha) = I \cdot \cos\alpha$, $g_{P0}(I, \alpha, v_\alpha) = I_{01} \cdot sen\alpha \cdot v_\alpha$, and $I_{01} = \rho \frac{3.6}{1000}$, with $\rho$ the precipitation volumetric density, being an equivalent precipitation intensity per unitary speed.

5. Method according to any claim 1 to 4, **characterized in that** said angle $\alpha$ is comprised between 30° and 60°.

6. Method according to any claim 1 to 5, **characterized in that** said surface is a transparent surface.

7. Method according to claim 6, **characterized in that** a windscreen wiper acts on said surface for the periodic removal of the accumulated precipitation, the windscreen wiper being operated on the basis of the precipitation detection by said one or more sensors of perceived intensity, or being simply temporized.

8. System for the determination of the real precipitation intensity from a moving vehicle, comprising:

- at least a speed sensor providing its speed $v_\alpha$ along time, the sensor being on board of the vehicle;
- a surface, integral to the vehicle, inclined by an angle $\alpha$ with respect to the plane perpendicular to the gravity force, with the condition $0 < \alpha < 90°$, on said surface being placed one or more sensors of perceived precipitation intensity that measure an increment of thickness of a precipitation layer on the same surface;
- a data processing electronic unit, for example a car central unit;

the system being **characterized in that** said data processing electronic unit comprises means to perform steps A-D of the method according to any claim 1 to 7.

9. System according to claim 8, **characterized in that** said data processing electronic unit is on board of the vehicle.

10. System for the space-time characterization of a precipitation field on wide territory areas, **characterized in that** it comprises:

- a plurality of systems according to claim 8 or 9, provided with means for the data transmission towards remote;
- a data collection and processing central unit, configured to collect real precipitation data sent from said plurality of systems, and map them on the territory areas along time.

11. System according to claim 10, **characterized in that** said data collection and processing central unit is the data processing electronic unit of claim 8 and is an only unit for all the vehicles.

**Patentansprüche**

1. Verfahren zur Bestimmung der tatsächlichen Intensität eines Flüssigkeitsniederschlags auf dem Boden ausgehend von einem sich bewegenden Fahrzeug, wobei das Fahrzeug mindestens einen Geschwindigkeitssensor aufweist, der dessen Geschwindigkeit $v_a$ über die Zeit liefert, sowie eine Oberfläche, die baueinheitlich mit dem Fahrzeug ist und in Bezug auf die Ebene rechtwinklig zur Gravitationskraft mit einem Winkel $\alpha$ angewinkelt ist, mit der Bedingung $0 < \alpha < 90°$, wobei auf der Oberfläche einer oder mehrere Sensoren der wahrgenommenen Intensität des Flüssigkeitsniederschlags angeordnet sind, die eine Zunahme einer Wasserschicht messen, die von dem atmosphärischen Niederschlag auf die Oberfläche niedergebracht wird, wobei das Verfahren **dadurch gekennzeichnet ist, dass** es die folgenden Schritte ausführt:

   A. Einholen von den Sensoren der wahrgenommenen Intensität eine Vielzahl von Werten der wahrgenommenen Niederschlagsintensität $I_P$ korrespondierend zu einer Vielzahl von aufeinanderfolgenden Zeitmomenten;
   B. Einholen von dem mindestens einen Geschwindigkeitssensor eine Vielzahl von Werten für die Geschwindigkeit $v_a$ in Korrespondenz zu der Vielzahl der aufeinanderfolgenden Zeitmomente;
   C. Durchführen einer Regression gemäß der folgenden Formel in Bezug auf eine Vielzahl von Wertepaaren $(I_p, v_a)$, die man aus den Messungen der Schritte A und B erhalten hat:

   $$I_P = I_{PV} + I_{PO} = g_{PV}\,(I,\ a)\ +\ g_{PO}\,(I,\ a,\ v_A)$$

   wobei $g_{PV}\,(I, a)$ eine analytische Funktion ist, die invertierbar ist in Bezug auf den realen Niederschlag I, der die Intensität des Niederschlags repräsentiert, der die horizontale Projektion der Oberfläche kreuzt, und $g_{PO}\,(I, a, v_a)$ eine analytische Funktion ist, welche die Intensität des Niederschlags repräsentiert, der die vertikale Projektion der Oberfläche kreuzt;
   D. Invertieren der Funktion $g_{PV}\,(I, a)$, die in dem Schritt C berechnet wurde durch eine Regression und Erhalten des realen Niederschlagswerts I.

2. Verfahren gemäß Anspruch 1, **dadurch gekennzeichnet, dass** die Regression von Schritt B eine Polynomregression ist.

3. Verfahren gemäß Anspruch 1 oder 2, **dadurch gekennzeichnet, dass** $g_{PO}\,(I, a, v_a)$ eine analytische Funktion des Wassergehalts in der Atmosphäre ist und dass es den folgenden Schritt nachfolgend auf den Schritt C durchführt:

   E. Invertieren der Funktion $g_{PO}\,(I, a, v_a)$, die in Schritt C durch Regression berechnet wurde, und Erhalten des Wertes des Wassergehalts in der Atmosphäre.

4. Verfahren gemäß einem der Ansprüche 1 bis 3, **dadurch gekennzeichnet, dass** die Regression von Schritt B eine Linearregression ist mit:

   $$I_P = I_{PV} + I_{PO} = I \cdot cos\alpha + I_{01} \cdot sen\alpha \cdot v_a$$

   mit $g_{PV}\,(I, a) = I \cdot cos\alpha$, $g_{PO}\,(I, \alpha, v_a) = I_{01} \cdot sen\alpha \cdot v_a$, und

   $I_{01} = \rho\dfrac{3.6}{1000}$ mit $\rho$ der volumetrischen Niederschlagsdichte, die ein Äquivalent der Niederschlagsintensität pro Einheitsgeschwindigkeit ist.

5. Verfahren gemäß einem der Ansprüche 1 bis 4, **dadurch gekennzeichnet, dass** der Winkel $\alpha$ zwischen 30° und 60° liegt.

6. Verfahren gemäß einem der Ansprüche 1 bis 5, **dadurch gekennzeichnet, dass** die Oberfläche eine transparente Oberfläche ist.

7. Verfahren gemäß Anspruch 6, **dadurch gekennzeichnet, dass** ein Windschutzscheibenwischer auf der Oberfläche wirkt zur periodischen Entfernung des angesammelten Niederschlags, wobei der Windschutzscheibenwischer auf der Basis der Niederschlagsdetektion von dem einen oder mehreren Sensoren der wahrgenommenen Intensität betrieben wird oder einfach zeitgesteuert.

8. System für die Bestimmung der realen Niederschlagsintensität von einem sich bewegenden Fahrzeug umfassend:

- mindestens einen Geschwindigkeitssensor, der dessen Geschwindigkeit $v_a$ über die Zeit liefert, wobei sich der Sensor an Bord des Fahrzeugs befindet;
- eine mit dem Fahrzeug baueinheitliche Oberfläche, die in Bezug auf die Ebene rechtwinklig zu der Gravitationskraft um einen Winkel $\alpha$ geneigt ist mit der Bedingung $0 < \alpha < 90°$, wobei auf der Oberfläche einer oder mehrere Sensoren der wahrgenommenen Niederschlagsintensität angeordnet sind, welche eine Erhöhung der Dicke einer Niederschlagsschicht auf der Oberfläche messen;
- eine elektronische Datenverarbeitungseinheit, beispielsweise eine Fahrzeugzentraleinheit;

wobei das System **dadurch gekennzeichnet ist, dass** die elektronische Datenverarbeitungseinheit Mittel aufweist zum Ausführen der Schritte A-D des Verfahrens gemäß einem der Ansprüche 1 bis 7.

9. System gemäß Anspruch 8, **dadurch gekennzeichnet, dass** die elektronische Datenverarbeitungseinheit an Bord des Fahrzeugs ist.

10. System für die Raum-Zeit-Charakterisierung eines Niederschlagsfeldes auf weitläufigen Territorialbereichen, **dadurch gekennzeichnet, dass** es aufweist:

- eine Vielzahl von Systemen gemäß Anspruch 8 oder 9, die versehen sind mit Mitteln für die Datenübertragung in die Ferne;
- eine Datensammel- und Verarbeitungszentraleinheit, die konfiguriert ist, um reale Niederschlagsdaten zu sammeln, die von der Vielzahl von Systemen gesendet werden und diese auf einer Karte der Territorialbereiche über die Zeit einzutragen.

11. System gemäß Anspruch 10, **dadurch gekennzeichnet, dass** die Datensammel- und Verarbeitungszentraleinheit die elektronische Datenverarbeitungseinheit von Anspruch 8 ist und eine einzige Einheit für alle Fahrzeuge ist.

**Revendications**

1. Procédé pour la détermination de l'intensité réelle de précipitation liquide sur le sol en partant d'un véhicule en mouvement, le véhicule comprenant au moins un capteur de vitesse fournissant sa vitesse $v_\alpha$ au cours du temps, aussi bien qu'une surface, intégrée au même véhicule et inclinée d'un angle $\alpha$ par rapport au plan perpendiculaire à la force de gravité, avec la condition $0 < \alpha < 90°$, sur ladite surface un ou plusieurs capteurs d'intensité perçue de précipitation liquide étant placés mesurant un incrément d'une couche d'eau déposée par la précipitation atmosphérique sur la même surface, le procédé étant **caractérisé en ce qu'**il exécute les étapes suivantes :

A. obtention à partir desdits un ou plusieurs capteurs d'intensité perçue d'une pluralité de valeurs d'intensité de précipitation perçue $I_P$ en correspondance à une pluralité d'instants de temps suivants ;
B. obtention à partir dudit au moins un capteur de vitesse d'une pluralité de valeurs pour la vitesse $v_\alpha$ en correspondance à ladite pluralité d'instants de temps suivants ;
C. exécution, en ce qui concerne une pluralité de couples de valeurs $(I_p, v_\alpha)$ obtenus à partir des mesures des étapes A et B, une régression selon la formule :

$$I_P = I_{PV} + I_{PO} = g_{PV}(I, \alpha) + g_{PO}(I, \alpha, v_\alpha)$$

dans laquelle $g_{PV}(I, \alpha)$ est une fonction analytique, réversible en ce qui concerne la précipitation réelle $I$, qui représente l'intensité de précipitation traversant la projection horizontale de ladite surface, et $g_{PO}(I, \alpha, v_\alpha)$ est une fonction analytique représentant l'intensité de précipitation qui traverse la projection verticale de ladite surface ;
D. inversion de la fonction $g_{PV}(I, \alpha)$ calculée à l'étape C par régression, et obtention de la valeur de précipitation réelle $I$.

**2.** Procédé selon la revendication 1, **caractérisé en ce que** la régression de l'étape B est une régression polynomiale.

**3.** Procédé selon la revendication 1 ou 2, **caractérisé en ce que** $g_{PO}(I, \alpha, v_\alpha)$ est une fonction analytique de la teneur en eau dans l'atmosphère, et **en ce qu'**il effectue l'étape suivante à la suite de l'étape C :

E. inversion de la fonction $g_{PO}(I, \alpha, v_\alpha)$ calculée dans l'étape C par régression, et obtention de la valeur de ladite teneur en eau dans l'atmosphère.

**4.** Procédé selon l'une quelconque des revendications 1 à 3, **caractérisé en ce que** la régression de l'étape B est une régression linéaire, avec :

$$I_P = I_{PV} + I_{PO} = I \cdot cos\alpha + I_{O1} \cdot sen\alpha \cdot v_\alpha$$

avec $g_{PV}(I, \alpha) = I \cdot cos\alpha$, $g_{P0}(I, \alpha, v_\alpha) = I_{O1} \cdot sen\alpha\, v_a$, et

$I_{O1} = \rho \frac{3.6}{1000}$, pétant la densité volumétrique de précipitation, étant une intensité de précipitation équivalente par vitesse unitaire.

**5.** Procédé selon l'une quelconque des revendications 1 à 4, **caractérisé en ce que** ledit angle $\alpha$ est compris entre 30° et 60°.

**6.** Procédé selon l'une quelconque des revendications 1 à 5, **caractérisée en ce que** ladite surface est une surface transparente.

**7.** Procédé selon la revendication 6, **caractérisé en ce qu'**un essuie-glace agit sur ladite surface pour l'enlèvement périodique de la précipitation accumulée, l'essuie-glace étant mis en oeuvre sur la base de la détection de précipitation par lesdits un ou plusieurs capteurs d'intensité perçue, ou étant simplement temporisés.

**8.** Système pour la détermination de l'intensité de précipitation réelle à partir d'un véhicule en mouvement, comprenant :

- au moins un capteur de vitesse fournissant sa vitesse $v_\alpha$ au cours du temps, le capteur étant à bord du véhicule ;
- une surface, intégrée au véhicule, inclinée d'un angle $\alpha$ par rapport au plan perpendiculaire à la force de gravité, avec la condition $0 < \alpha < 90°$, sur ladite surface un ou plusieurs capteurs d'intensité de précipitation perçue étant placés qui mesurent un incrément d'épaisseur d'une couche de précipitation sur la même surface ;
- une unité électronique de traitement de données, par exemple une unité centrale de voiture ;

le système étant **caractérisé en ce que** ladite unité électronique de traitement de données comprend un moyen pour effectuer les étapes A à D du procédé selon l'une quelconque des revendications 1 à 7.

**9.** Système selon la revendication 8, **caractérisé en ce que** ladite unité électronique de traitement de données est à bord du véhicule.

**10.** Système pour la caractérisation spatiotemporelle d'un champ de précipitation sur de larges zones de territoire, **caractérisé en ce qu'**il comprend :

- une pluralité de systèmes selon la revendication 8 ou 9, munis d'un moyen pour la transmission de données à distance ;
- une unité centrale de collecte et de traitement de données, configurée pour collecter des données de précipitation réelles envoyées en provenance de ladite pluralité de systèmes, et pour en dresser la carte sur les zones de territoire au cours du temps.

**11.** Système selon la revendication 10, **caractérisé en ce que** ladite unité centrale de collecte et de traitement de données est l'unité électronique de traitement de données de la revendication 8 et est une unité unique pour tous les véhicules.

Fig. 1

Va

$\Delta s / \Delta t$

Perceived precipitation intensity

Speed of the vehicle

On-board central unit

Real precipitation intensity

Quantity of water in atmosphere

Remote transmission to central unit

$I_{pv} = I \cdot cos\alpha$

$I_p = \Delta s / \Delta t = I_{pv} + I_{po}$

$I_{po} = \rho \cdot 3.6/1000 \cdot sen\alpha \cdot v_a$

Fig. 2

$$I_p = \Delta s/\Delta t$$

$I_{o1} \cdot sen\ \alpha$

$I \cdot cos\ \alpha$

$V_a$

Fig. 3

**EP 2 835 291 B1**

**Patent documents cited in the description**

- EP 1398230 A
- US 2012006110 A
- FR 2970215
- US 20060055354 A